# EUROPEAN PATENT APPLICATION

(11) **EP 1 227 064 A1**
(43) Date of publication of application: **31.07.2002**
(21) Application number: 01810072.7
(22) Date of filing: 25.01.2001
(51) Int. Cl.: C01G 39/02, B01J 23/28, B01J 37/06

(54) **Process for the production of molybdenum oxide, molybdenum oxide produced from this process and use thereof**

(71) Applicant: Eidgenössische Technische Hochschule Zürich, 8092 Zürich (CH)
(72) Inventor: Nesper, Reinhard, 8802 Kilchberg (CH); Krumeich, Frank, 8046 Zürich (CH); Niederberger, Markus, 6383 Dallenwil (CH); Baiker, Alfons, 8152 Opfikon (CH); Eigenmann, Florian, 8904 Aesh (CH)
(74) Representative: Groner, Manfred

(57) **Abstract**

The process for the production of molybdenum oxide is characterized in that molybdic acid is intercalated by a template to obtain a molybdenum oxide composite and wherein the template is removed subsequently using an acid. The molybdenum oxid is nanoscopic and has a fibrous morphology. The fibres are tangled together forming bundles. The molybdenum oxid is preferably used as a catalyst, for example in alcohol oxidation.

## Description

In general, low temperature synthesis strategies are interesting for the preparation of molybdenum oxide-organic composite materials, especially either via intercalation routes or via template approaches. Hydrothermal reaction of molybdic acid or sodium molybdate with dodecyltrimethylammonium bromide yielded a lamellar composite material with the composition [C₁₂H₂₅N(CH₃)₃]_{0.5}MoO_{3.25} (Janauer, G.G.; Dobley, A.; Guo, J.; Zavalij, P.; Whittingham, M.S. Chem. Mater. 1996, 8, 2096; Whittingham, M.S.; Guo, J. -D.; Chen, R.; Chirayil, T.; Janauer, G.; Zavalij. P. Solid State Ionics 1995, 75, 257.). In a similar intercalation approach, ammonium molybdate was reacted with long chain quaternary ammonium surfactants at different pH values (Ciesla, U.; Demuth, D.; Leon, R.; Petroff, P.;Stucky, G.; Unger, K.; Schüth, F.J. Chem. Soc., Chem. Commun. 1994, 1387.).In the obtained layered molybdenum oxide-surfactant composites, the d-spacings of the layers (2.07-2.55 nm) were controlled by variation of the surfactant alkyl chain length. Using a template approach, mesostructured molybdenum oxide toroids were prepared from a dimeric molybdenum ethoxide complex with a bridging dode-cylimido group (Antonelli, D.M.; Trudeau, M. Angew. Chem. Int. Ed. Engl. 1999, 38, 1471.). Although it was proposed that the removal of the organic templates from the lamellar molybdenum oxide-surfactant composites may lead to the formation of mesoporous solids, in all cases the material collapsed completely upon removal of the template molecules. Thus, it is the object of the present invention to provide a more efficient process for the production of nanoscopic molybdenum oxide. According to the invention, this process provides the production of gram-quantities of such a material. In general, the intercalation of template molecules leads to a specific structuring of the materials. In this case, the removal of the surfactant molecules directs a structural rearrangement, yielding a novel morphology.

By using molybdic acid MoO₃·2H₂O, it is possible to combine several advantages: A) the precursor is cheap and easy to synthesize in large quantities, b) the air- and moisture stability of the precursor offers easy handling without special precautions. Application examples of the invention are explained in more detail below. The enclosed illustrations show the following:

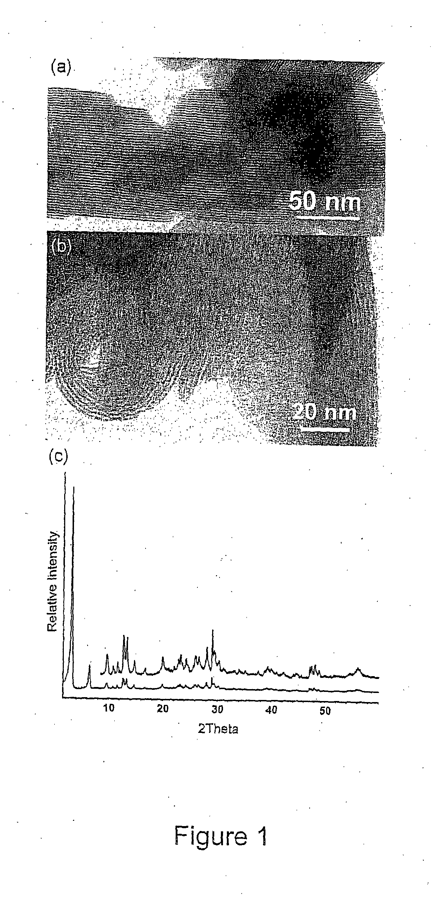

- Fig. 1.: (a) TEM image of the molybdenum oxide-amine composite obtained from the hydrothermal treatment at 120°C for 7 days of molybdic acid and dodecylamine in ethanol and distilled water, showing the layer structure of the lamellar phase. (b) TEM image of a lamellar molybdenum oxide-dodecylamine composite after hydrothermal treatment at 100°C for 3 days, demonstrating layers that started to roll. (c) X-ray powder diffraction pattern of a lamellar molybdenum oxide-dodecylamine composite after hydrothermal treatment. The 001 reflection, representing the distance between the molybdenum oxide layers, corresponds to a d-value of 2.76 nm. The enlarged section shows the characteristic reflections generated by the structure within the layers.

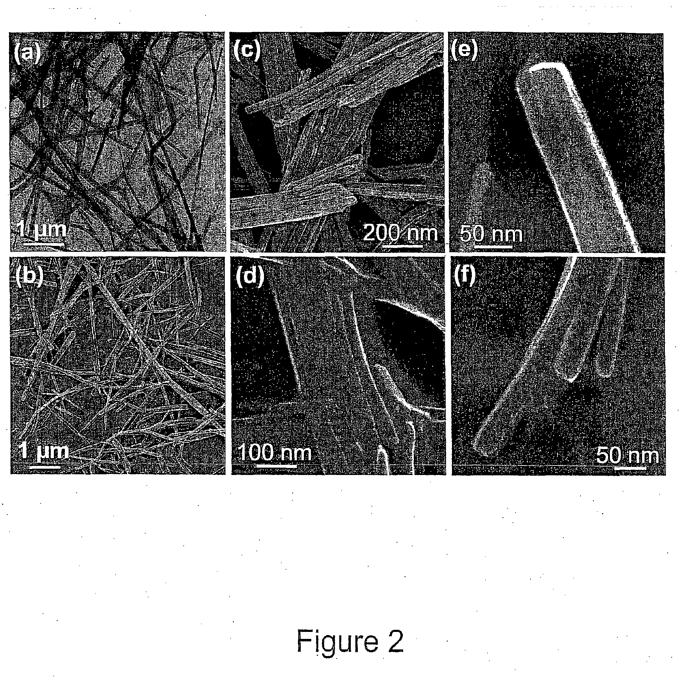

- Fig. 2.: Molybdenum oxide fibres obtained by the treatment of a molybdenum oxide-dodecylamine composite at room temperature with nitric acid for 56 h (a) or 24 h (b-f), respectively. (a) Representative TEM image. The fibre length ranges from 350 nm up to 14 µm and the diameters vary from 20 to 280 nm. Hardly any by-product can be seen. (b)-(f) SEM images. (b) Survey. (c) Higher magnified area. (d) Close view on one bundle (diameter ~180nm) consisting of smaller filaments. (e)-(f) Tips of fibres.

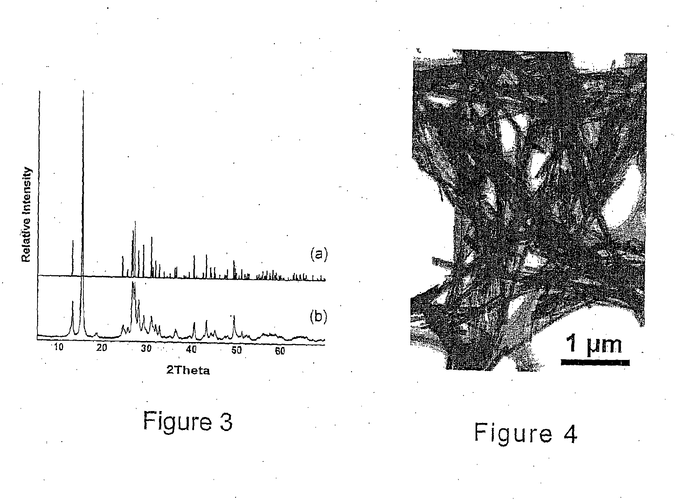

- Fig. 3.: (a) The theoretical pattern of α-molybdic acid MoO₃·H₂O. (b) X-ray powder diffraction pattern of the fibrous molybdenum oxide.
- Fig. 4.: Representative TEM image molybdenum oxide fibres which have been heated at 600°C for several hours at air.

A fibrous molybdenum oxide material has been synthesized on a soft chemistry route involving three steps: 1) molybdic acid (MoO₃·2H₂O) and neutral primary amines with long alkyl chains (CₙH₂ₙ₊₁NH₂ with 11≤n≤16) are reacted; 2) the resulting composite is treated hydrothermally; 3) the reaction product is stirred in nitric acid.

In the first step of the synthesis, the molybdic acid was either mixed with a solution of the amine in ethanol or with the amine in pure, liquid form. After adding distilled water, aging at room temperature for at least 48 hours converted the yellow suspension into a white precipitate. From the subsequent hydrothermal treatment, the hydrolysis product was either taken directly or after filtering. Both procedures resulted in a lamellar structured molybdenum oxide-amine composite.

To investigate the influence of the amount of template on the morphology of the product, the initial molar molybdenum to template ratio (Mo/template) was varied from 4 to 1 whereas the amounts of water and ethanol for dissolution of the amine molecules were kept constant. After hydrolysis and aging at room temperature, a similar lamellar-structured molybdenum oxide-amine composite was obtained for Mo/template ratios ranging from 3 to 1. Further decrease of the template content. i.e., Mo/template ration = 4, inhibits the formation of the lamellar molybdenum oxide-amine intermediate. The yellow suspension kept its color during aging at room temperature for several days and, corresponding to XRD measurements, the initial molybdic acid remained unreacted.

Various experiments were performed to investigate the effect of temperature and duration of hydrothermal processing on the morphology of the product. Independent of the duration (1 to 14 days), hydrothermal treatment at 100°C or 120°C showed no distinct effect on the obtained lamellar phase. In contrast to that, the morphology of the product strongly depends on reaction time, when heated at 150°C. After 1 day, the white powder still consisted of a well-ordered lamellar structure, whereas a black powder was obtained after 7 days. For this, XRD and TEM investigations showed a poorly structured lamellar phase.
TEM investigations of the intermediate product clearly revealed a lamellar morphology. A typical micrograph of this molybdenum oxide-amine composite is reproduced in Fig. 1a. The molybdenum oxide forms parallel layers, which appear with dark contrast in the TEM image, while the amine molecules are intercalated between these layers. Sometimes, these layers started to bend as shown in Fig. 1b. The lamellar structure is confirmed by XRD measurements. The powder diffraction pattern according to Fig. 1c shows the highly intense and sharp reflections at low scattering angles that are typical for layered structures. The peak with highest intensity is located in d-value range between 2.6 and 3.2 nm and corresponds to the distance between the molybdenum oxide layers. The d-values of these 001 reflections depend on the alkyl chain length of the intercalated amine template. This observation indicates that the template molecules are indeed located in between the molybdenum oxide layers. At higher scattering angles, less intense sharp reflections at smaller d-values indicate crystallinity of the MoO₃ layers.

According to elemental analysis, the composition of the layered molybdenum oxide-amine composite can be expressed in a general formula [C₁₂H₂₈N]_{0.5}MoO_{3.25}, which is in excellent agreement with the previously reported lamellar molybdenum oxide-surfactant composite [C₁₂H₂₅N(CH₃)₃]_{0.5}MoO_{3.25}.

To remove the template molecules, the lamellar molybdenum oxide-amine composite was reacted with acid in a further synthesis step. The most suitable method involves the treatment of the composite with 33% HNO₃. Stirring at room temperature for 48 hours yielded a template-free molybdenum oxide. The concentration of the acid was about 13 to 15 fold excess with respect to the nitrogen content of the composite. Filtering and washing of the white precipitate with ethanol and diethyl ether gave a fibrous powder which was difficult to grind in a mortar.

The final product almost exclusively consists of molybdenum oxide fibres as shown in Fig. 2a and 2b. Fig. 2a shows a typical TEM image of this material representing a general view of the ribbon-like morphology. In some regions, the molybdenum oxide fibres are curved and tangled together forming bundles. The fibres exhibit a wide range of different lengths and widths. Their diameters vary between 20 and 280 nm and their lengths range from 350 nm up to 15 µm. In general, the majority of the fibres has an approximate diameter of 140 nm and the average length is about 5 µm. SEM micrographs as shown in Fig. 2b prove the almost exclusive presence of molybdenum oxide fibres.

SEM images at higher magnification illustrate several other notable features of the molybdenum oxide fibres. Fig. 2c shows that the fibres have many discontinuities and defects along their axis, giving rise to a rough surface. A closer examination of the material reveals that the shape of the fibres is a flat needle rather than a round cylinder. In addition, they seem to consist of smaller anisotropic particles that are agglomerated to bundles. This is clearly seen in the SEM micrograph at higher resolution in Fig. 2d that offers more details of one single bundle. The overall diameter of this bundle is about 180 nm. It is made up of agglomerated smaller filaments with diameters ranging from 20 to 50 nm. Fig. 2e and f depict the tips of two molybdenum oxide fibres. Fig. 2e illustrates that the fibre is neither round nor rotational symmetric. Instead it seems as if two single filaments are agglomerated vertically to form a T-like angular particle. In Fig. 2f the tip of a bundle of fibres is represented, giving evidence that the bundle with an average diameter of 115 nm is composed of at least 5 smaller filaments with quite similar diameters of about 40 nm.

The X-ray powder diffraction pattern of the fibrous material according to Fig. 3b is in good agreement with the theoretical X-ray powder pattern of white α-molybdic acid MoO₃·H₂O shown in Fig. 3a. The relatively sharp high angle peaks indicate a rather good crystallinity. The elemental analysis is consistent with the composition of the fibrous product as MoO₃·H₂O. The amount of organic residues in the final material is about 1%.

The absence of a porous structure is also confirmed by nitrogen adsorption and desorption isotherms. The calcined molybdenum oxide fibres (300°C) have a N₂ Brunauer-Emmett-Teller (BET) surface area of 35 m²/g.

Molybdenum oxides are important and effective catalysts in alcohol or methane oxidation. The novel particles with a filament-like shape in the nanoscale dimension have a large fraction of atoms exposed to the surface, and, therefore, they are especially promising with respect to provide new catalytic characteristics. For catalytic applications, thermal stability of the material is indispensable and is therefore probed. The fibres were thermally treated at 600°C in air. After 3 hours, both the organic residues as well as the water molecules were removed and anhydrous MoO₃ was formed. However, the fibrous morphology does withstand this treatment and remains unaltered as shown in Fig. 4.

Molybdic acid MoO₃·2H₂O represents a suitable precursor for the template-directed synthesis of nanostructured molybdenum oxides. The layered structure of this host compound enables a direct intercalation of amine molecules due to strong interactions between the surfactant and the inorganic species.

It is an interesting property that the yellow molybdic acid MoO₃·2H₂O reacts to the white precipitate at room temperature in the presence of the amine molecules. Since the white lamellar product was also obtained by the reaction in anhydrous diethyl ether, the presence of water does not seem necessary to transform the molybdic acid into the white composite compound. The structure of yellow molybdic acid consists of [MoO₅(H₂O)]-octahedra connected to infinite layers, with water molecules intercalated inbetween. These two kinds of differently bound water molecules can be removed in two steps, which has been shown to occur topotactically. So in the present case it seems likely that the color change from the yellow molybdic acid to the white composite is not caused by hydrolysis reaction but by dehydration of MoO₃·2H₂O by which both water molecules are replaced by the amine molecules (Scheme 1).

### Scheme 1. Reaction scheme for the formation of the molybdenum oxide fibres.

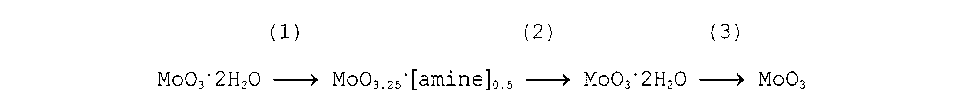

(1) Addition of amines, ethanol and water followed by hydrothermal treatment
(2) Reaction with HNO₃, i.e. removal of intercalated amines
(3) Removal of water molecules at elevated temperature

By acid treatment of the molybdenum oxide-amine composite, the template molecules are substituted again by water molecules forming the white α-molybdic acid MoO₃·2H₂O. The whole process can be summarized as a substitution of water molecules by amine molecules, followed by a re-substitution of these organic material again by water molecules. But since the XRD pattern of the lamellar molybdenum oxide-amine composite neither corresponds to the theoretical pattern of yellow MoO₃·2H₂O, white MoO₃·2H₂O nor anhydrous MoO₃, a structural rearrangement must have taken place during step (1), excluding a topotactical substitution process.

Removal of the template molecules from the molybdenum oxide-anime composite does not yield a mesoporous material. Instead, the reaction in nitric acid leads to a morphology transformation from the lamellar composite material into the fibrous particles, i.e. the transformation from a two-dimensional to a one-dimensional material. This process can be attributed to the loss of the organic intercalates, which probably induces a structural rearrangement. Since the final material also macroscopically shows the fibrous shape, it is interesting to note that this fibrous-like appearance is preserved from the macroscopic to the microscopic detail.

Examples for the production of the innovative molybdenum oxide are disclosed below

Sodium molybdate Na₂MoO₄, undecyl-, dodecyl- and hexadecylamine were obtained from Fluka (Switzerland) and used without further purification. Molybdic acid was synthesized by dissolving Na₂MoO₄ in 3 M perchloric acid. For hydrothermal treatment, we used Parr Acid Digestion Bombs with 23 or 45 ml Teflon cups as autoclaves.

In a typical procedure, molybdic acid MoO₃·2H₂O (10 mmol) was mixed with the amine in 5 ml ethanol (molar ratio 2:1). After the addition of 15 ml distilled water, the yellow suspension was stirred at room temperature for 48 hours until a white precipitate was formed. The hydrothermal reaction of this composite was performed in an autoclave at 120°C for 3 to 5 days. After filtering and washing with ethanol and diethyl ether, a white powder resulted.

By stirring the molybdenum oxide-amine composite (2.5g) in 10 ml 33% nitric acid (48h at RT), the fibrous material was formed. The product was filtered, washed with ethanol and diethyl ether and then dried at 80°C under vacuum (10⁻³ mbar).

The X-ray powder diffraction (XRD) diagrams of all samples were measured in transmission mode (03 mm glass capillaries, CuKα₁ radiation) on a STOE STADI-P2 diffractometer equipped with a position sensitive detector (resolution ~0.01° in 2Theta). Transmission electron microscopy (TEM) investigations were performed on a CM30 ST microscope (Philips), operated at 300 kV. The material was deposited onto a perforated carbon foil supported on a copper grid. For scanning electron microscopy (SEM), performed on a Hitachi S-900, the sample was coated with platinum (particle size ~4 nm) or, for higher magnifications, with tungsten (particle size ~2 nm). Nitrogen adsorption of the molybdenum oxide fibres was measured at 77.35 K with an ASAP 2010 Micromeritics apparatus. Prior to the measurement, the sample was degassed at 300°C for several hours under vacuum (1.4·10⁻³Pa). The surface area was determined by the BET method.

C, H, and N analysis was carried out by means of combustion test methods on a LECO CHN-900. The molybdenum analysis was performed by inductive coupled plasma/optical emission spectroscopy (ICP-OES) on a Thermo Jarrell Ash IRIS.

## Claims

1. A process for the production of molybdenum oxide, wherein molybdic acid is intercalated by a template to obtain a molybdenum oxide composite and wherein the template is removed subsequently using an acid.

2. A process according to claim 1, wherein the template is an amine.

3. A process according to claim 1 or 2, wherein the amine is an amine with at least one alkyl chain.

4. A process according to any one of the claims 1 to 3, wherein the amine is removed with an acid.

5. A process according to any one of the claims 1 to 3, wherein the amine is removed with an inorganic acid.

6. A process according to claims 4 and 5, wherein the acid is nitric acid.

7. A process according to any one of claims 1 to 6, wherein preferably a hydrothermal treatment leads to a lamellar molybdenum oxide-amine composite.

8. A process according to any one of the claims 1 to 7, wherein the removal of the intercalated amin leads to a molybdenum oxide with a fibrous morphology.

9. A process according to any of the claims 1 to 8, wherein the removal of the intercalated amine leads to a morphology transformation from a lamellar composite material into fibrous particles.

10. Molybdenum oxide wherein it is nanoscopic and has a fibrous morphology.

11. Molybdenum oxide according to claim 10, wherein the length of the fibres is less than 20µm and preferably less than 15µm.

12. Molybdenum oxide according to claim 10 or 11, wherein the diameter of the fibres is in the range from 20 to 300 nm and preferably in the range from 50 to 150 nm.

13. Molybdenum oxide according to any of the claims 10 to 12, wherein the fibres are tangled together forming bundles.

14. Molybdenum oxide according to any of the claims 10 to 13, wherein the fibres have many discontinuities and defects along their axis, giving rise to a rough surface.

15. Molybdenum oxide according to any of the claims 10 to 14, wherein the shape of the fibres is a flat needle.

16. Molybdenum oxide according to any of the claims 10 to 15, wherein the fibres consist of anisotropic particles agglomerated to bundles.

17. Molybdenum oxide according to any of the claims 13 to 16, wherein the bundles are made up of agglomerated smaller filaments.

18. Molybdenum oxide according to claim 17, wherein the filaments have a diameter in the range from 20 to 50 nm.

19. Use of molybdenum oxide according to any one of the claims 10 to 18 as a catalyst.

20. Use of molybdenum oxide according to any one of the claims 10 to 18 as a catalyst in alcohol oxidation.

21. Use of molybdenum oxide according to any one of the claims 10 to 19 as a catalyst in the oxidation of methanol to formaldehyde.
